# EUROPEAN PATENT APPLICATION

(11) **EP 2 998 187 A1**
(43) Date of publication of application: **23.03.2016**
(21) Application number: 14185759.9
(22) Date of filing: 22.09.2014
(51) Int. Cl.: B61L 25/08, G06F 21/60, G06F 21/84

(54) **Method for transferring information to be displayed at an information terminal**

(71) Applicant: Thales Deutschland GmbH, 71254 Ditzingen (DE)
(72) Inventor: Müller, Frank, 12555 Berlin (DE)
(74) Representative: Kohler Schmid Möbus Patentanwälte

(57) **Abstract**

The invention concerns a method for transferring information to be displayed at a non-safe information terminal with a display device, the method comprising:
- Graphical preparation of the information by generating an target image showing the information by means of a safe computer;
- Generation of at least two non-overlapping partial images, wherein the at least two partial images together contain all information of the target image;
- Transfer of the partial images from the safe computer to the non-safe information terminal;
- Generation of a recomposed image by assembling the partial images and display of a recomposed image at the non-safe information terminal;
- Human voting whether the recomposed image is faulty.

## Description

### Background of the invention

The invention relates to a method for transferring information, in particular safety relevant railway information, to be displayed at an information terminal with a display device.

A method for safe display of a status of a failsafe system is known from EP 0 970 869 A2.

In railway applications safety relevant railway information, e.g. information concerning the status of railway objects, i.e. signals, trains, points and track sections, have to be displayed in a safe manner. Thus an image has to be generated based on information data which is displayed at a display device of an information terminal.

Existing solutions are based on safety of the whole information terminal in itself, often by hardware diversity (C900, VICOS). Therefore the calculation of the graphics of the information to be displayed is completely done on a safe operator terminal.

EP 0 970 869 A2 discloses a method for safe display of a status of a failsafe system, wherein two picture structure modules are provided. Each picture structure module creates picture symbols (symbols containing valuable information) based on status data, which is supplied from the interlocking via two independent input channels. The picture structure modules are independent of each other. The picture symbols are generated by means of both picture structure modules and are transmitted to a display module where they are composed to a complete picture. Since the two picture structure modules must be independent to each other, this property must be verified and validated. Thus similar conditions must be given as required for a safe computer.

### Object of the invention

It is an object of the invention to provide a method for transferring information for displaying said information with reduced requirements concerning hardware and software, while ensuring the display of reliable information.

### Description of the invention

This object is achieved by a method according to claim 1.

According to the invention the information is displayed at a non-safe information terminal. The inventive method comprises:
- Graphical preparation of the information by generating a target image showing the information by means of a safe computer;
- Generation of at least two non-overlapping partial images, wherein the at least two partial images together contain all information of the target image;
- Transfer of the partial images from the safe computer to the non-safe information terminal;
- Generation of a recomposed image by assembling (rejoining) the partial images and display of a recomposed image by means of the non-safe information terminal;
- Human voting whether the recomposed image is faulty.

A "non-safe" information terminal is a terminal (computer) which does not comply with SIL 2, in particular which does not comply with any safety integrity level. The non-safe information terminal has to be able to decrypt and execute codes transferred from the safe computer (PC, workstation).

A "safe computer" is a computer that fulfills SIL 2 or better, preferably SIL 4. The safe computer according to the invention comprises a safe graphical processor.

The safe computer generates the target image according to information to be displayed (graphical preparation). The non-safe information terminal does not process the received information but only assembles partial images to a recomposed image. The target image and the partial images contain data that represent (valuable) information, e.g. information which is interesting for railway applications. The target image (image to be displayed) preferably shows information about identification of objects, about state of objects, about additional information of objects. Objects are for example station layout, line layout, trains, tracks, points, signals, level crossings, crossings, key lock, bridges, tunnel gates, etc.

According to the invention the partial images are transmitted to the information terminal in a logical multi-channel manner, wherein different data are transmitted via the different logical channels. The number of logical channels corresponds to the number of partial images. No redundancy has to be provided. Revelation of failures is done by an operator (natural person) by looking at the displayed recomposed image. If no failure (transmission failure, processing failure) occurred the recomposed image appears complete with no visible damages. In case a failure occurred the partial images do not match to each other, i.e. they cannot be combined to a reasonable picture, e.g. symbols are not displayed completely or are displayed with an offset etc. Damages of the recomposed image will be visible instantly. In case failures occur only for single pixels, the failure might not be recognized by the operator. Yet, since a single faulty pixel in general does not distort the information which should be transmitted to the operator (a displayed object which carries relevant information is in general composed of a plurality of pixels), non-recognizable transmission failures do not have any impact on the transferred information content and therefore on the safety level.

With the present invention information can be safely displayed at a non-safe information terminal, wherein "safe display" means that it is ensured that failures during transmission or display will be revealed with a dedicated detection rate within a dedicated detection time, provided that the operator watches the recomposed image.

### Preferred variants

Preferably the data sizes of the partial images are of the same magnitude (ratio of bigger size to smaller size less than 10).

In a preferred variant the partial images are generated by applying a filter to the target image.

Preferably the filter is generated by the safe computer.

Preferably a random filter (new filter pattern for each filtering process) is used. I.e. the cells are randomly assigned to the partial images.

In a preferred variant a binary filter is used. To apply a "binary filter" means that all cells which are not chosen for the first partial image are assigned to the second partial image.

In a highly preferred variant at least two filter codes (B, C) are generated by the safe computer, the filter codes are transmitted to the non-safe information terminal, and the filter codes are executed by the information terminal, whereby the content of the partial images are displayed at the information terminal at predefined positions. The number of filter codes corresponds to the number of partial images and represent an execution statement instructing the information terminal how to display the partial images, i.e. the filter codes determine which pixel of the partial images is to be displayed at which spot of the display device. For execution of the filter codes the partial images have to be completely transferred to the non-safe information terminal. The target image (image to be displayed) and the algorithm how to display the partial images are under full control of the safe computer.

Preferably the filter codes are encrypted by the safe computer, transmitted encrypted to the information terminal, and decrypted by the information terminal.

In a highly preferred variant of the inventive method, the target image is divided into a plurality of cells. By applying the filter a first subset of cells is selected to form a first partial image and a second subset of cells is selected to form a second partial image. Further subsets can be selected. The selection can be done e.g. in form of a chessboard filter or the like.

The filter is preferably chosen such, that the partial images exclude each other, i.e. there is no overlap between the partial images. Each cell is assigned to one partial image only.

The cells can be of different size, but should be chosen such, that an object from which a (valuable) information can be obtained is not comprised completely of a single cell, i.e. a maximum size can be specified and/or the shape of the cells can be chosen accordingly.

In a special variant the cells of each partial image are transmitted and/or displayed in a random order.

In a preferred variant the cells of each partial image form a continuous image area. Alternatively it is also possible to use cells which form a non-continuous image area, i.e. each partial image contains cells which form "borders of holes" and/or "islands".

It is highly preferred that the at least two partial images are transmitted to a plurality of non-safe information terminals. The safe computer then acts as a central computer that provides the plurality of non-safe information terminals with the required information. Thus a plurality of (non-safe) information terminals can be provided with information while only one safe computer is required.

It is preferred that the partial images are transmitted via the same physical transmission channel. The transmission of the partial images in one and the same physical transmission channel can be realized by using a scrambling mechanism.

A possibility for easily revealing failures during transmission or display is to generate an executable color code by the safe computer, the color code when executed initializing the display of a failure color at the display device of the information terminal in an area corresponding in size and shape and location to the area where the recomposed image is to be displayed, to transmit the color code to the non-safe information terminal prior to transmission of the partial images, and to execute the color code by the information terminal. The color code causes the failure color to be displayed at the area of the display device, where the recomposed image is to be displayed ("spot of the recomposed image"), wherein the area in which the failure color is displayed is of the same size and the same shape ("correct size and shape") as the target image. The failure color is chosen such that it probably does not appear in the target image. Thus the human voter easily recognizes a failure within the recomposed image, namely by identifying the failure color within the recomposed image. In case of an error-free transmission and display of the information the failure color is not present in the recomposed image. Preferably the color code is encrypted by the safe computer, transmitted encrypted to the information terminal, and decrypted by the information terminal. The color code has to be executed prior to the filter codes, whereas the generation of the color code and the filter codes can be done in an arbitrary order.

In order to reveal freezing or total failure of the non-safe information terminal it is advantageous that a life sign indicator is applied.

The inventive method is advantageously applied with a train protection system.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawings.
- Fig. 1: shows the basic method steps of the inventive method.

- Fig. 2: shows a detailed flow chart of a preferred variant of the inventive method, in which the steps are related to the compounds by means of which the steps are carried out.
- Fig. 3: shows an example of a filter which can be used for generating two partial images.

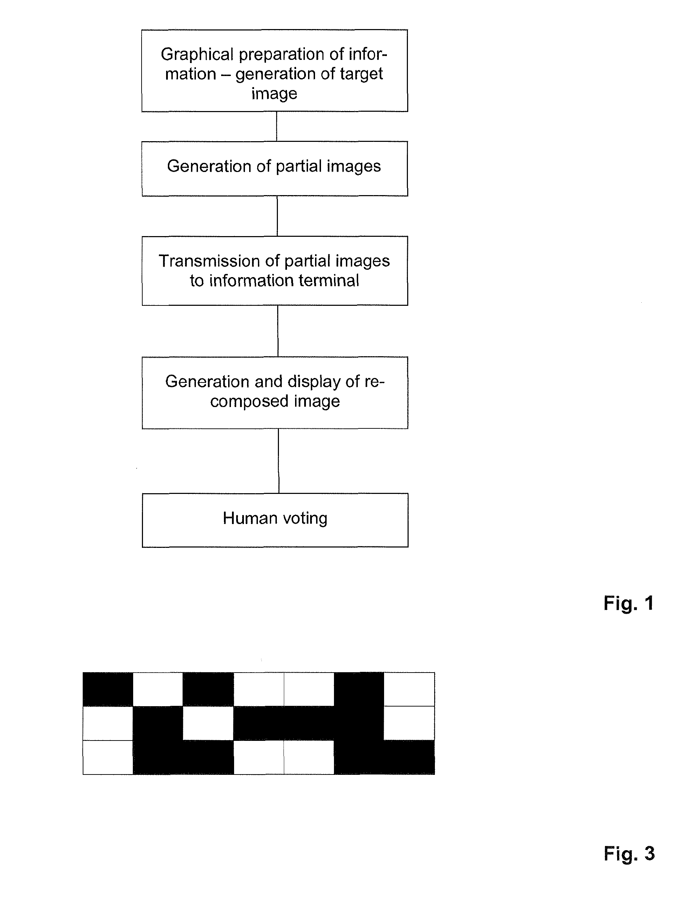

**Fig. 1** shows the basic method steps of the inventive method. The main idea of the invention is to generate a target image by means of a safe computer and to divide the target image into partial images also by means of the safe computer (or another safe computer) and to transmit the partial images from the safe computer to a non-safe information terminal, where the information should be displayed to an operator. According to the invention the partial images are rejoined at the non-safe information terminal to form a recomposed image which - in case of an absence of failures - corresponds to the target image. If a failure occurs a mismatch of the partial images is visible in the recomposed image, which can be easily recognized by human voter (operator). No redundant devices and no multitude of safe computers are required.

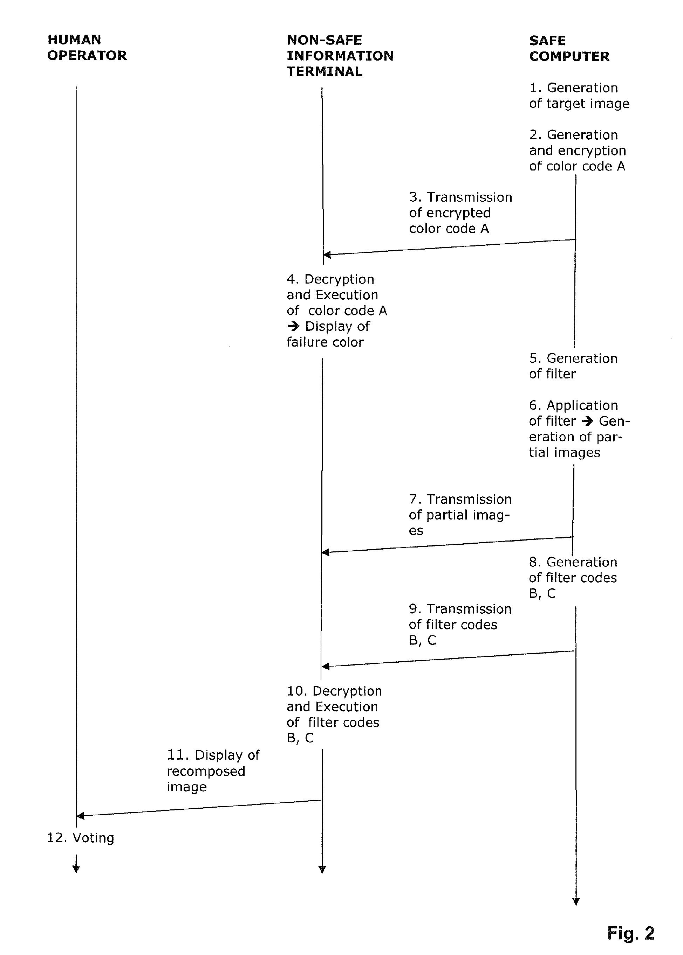

**Fig. 2** shows an example of how the inventive method can be carried out in detail.

First a target image (image containing valuable information to be displayed to the operator) is computed by a safe computer (step 1). The target image may be a whole screen content but can also be a part (e.g. single windows) of a screen content.

The inventive method may use a "failure color". The target image and the partial images in general consist of background and foreground information. If the background has a unique color the failure color shall differ from the background color. The failure color could be e.g. the color that is visible on the non-safe information terminal when switched off. By default this could be black or some sort of grey. A color code A is generated (and might be encrypted) by means of the safe computer (step 2) and transmitted to the non-safe information terminal (step 3). The color code is decrypted and executed by the non-safe information terminal (step 4). By executing the color code the failure color is displayed at the display device of the non-safe information terminal, wherein the color code determines which pixel of the display device are to be displayed in failure color (size, shape and position of the failure color area). Size, shape and position of the failure color area preferably correspond to the size, shape and position of the target image to be displayed. Thus the whole area in which the target image is to be displayed appears in "failure color".

After the target image is computed on the safe computer, partial images are generated by means of the safe computer and transferred to the non-safe information terminal to be displayed. Therefore a filter is generated (step 5). A possible filter is shown in **fig. 3****.** The filter shown in fig. 3 consists of regular cells. Yet it is also possible to use a filter with non-regular cells. In present example each cell has one of two filter modes (binary filter). The filter has the same size as the target image. When overlaying the target image with the filter, one mode hides any information of the corresponding cell of the target image through the filter; the other mode just passes any information of the corresponding cell of the target image through the filter.

Except of cells which only contain background (no valuable information), each filter cell should be chosen sufficiently granular (fine structured), that no single information of the target image fits to one cell. That means: let a single colored square without different colored border be such a single information. Then the cell shape and size must not be equivalent to that square. This can be achieved by claiming a minimum size and/or an according shape of the cells that does not comply with the size and shape of the information to be displayed.

It is also possible to provide cells which contain a single information, but additionally contains parts of another information. That means: let that single significant information be a locking state of a branch of point. Then the cell should either contain only a part of the locking state, or should also contain a part of another significant information (e.g. a part of a connected track element)

There is no need to have cells of the same size only. E.g. larger background sections may form a single cell.

In step 6 the filter is applied by overlaying the target image with the filter and the inverted filter respectively, thereby generating partial images which are transmitted to the non-safe information terminal (step 7). Filter codes B, C are generated (step 8), the execution of which causes the display of the partial images. The filter codes B, C are transmitted to the non-safe information display (step 9) where the filter codes B, C are executed (step 10). Color code A and filter codes B, C can be encrypted, transmitted, decrypted, and executed separately or compounded. The execution of color code A and filter codes B, C has to be carried out sequentially. It is also important that there is no mix-up of color code A and filter codes B and C belonging to a first target image with color code A' and filter codes B' and C' belonging to a second target image. Corresponding failures may be revealed due to the randomly generated filter. It is also possible to split up the encryption, transmission, decryption and execution of color code A' and filter codes B' and C' for a target image per single filter cell.

After the filter codes B, C are executed on the non-safe information display the recomposed image (re-joined partial images) is visible to the operator. The operator examines the recomposed image with regard to failure color, incomplete objects, and offsets etc., which are visible in case of a processing or transmission failure (step 12).

The procedure may be applied only to areas that contain information. A large area, that contains background only, can be excluded from this procedure, especially, when these areas appear always in the same regions.

The following failure modes may occur due to transmission errors or image display execution errors on the non-safe information display:
- Crosswise misplacement of identical cells on the non-safe information terminal. This is not hazardous, because in the end the constructed image is identical to the original image. There is no need to reveal this fault.
- Crosswise misplacement of cells of the same size with identical shapes, but partly different colors. This can be revealed, due to color mismatch to neighbor cells.
- Crosswise misplacement of cells of the same size with different shapes is revealed obviously.
- Crosswise misplacement of cells of different size. In that case either significant information of other cells is overwritten (not completely visible anymore) or significant information of other cells appear misplaced (not correctly connected) or failure color appears.
- Misplacement of a single cell appears as a suppression/deletion of the correct placement of a single cell and will leave a box with the failure color.
- Modification of a cell into another meaningful information can be prevented due to the above mentioned features of the cells (granularity, minimum size or additionally contained information).
- Corruption of cell (no meaningful information, use of non-meaningful shapes or colors) will be revealed obviously.
- Corruption of cell into another meaningful information can also be prevented due to the above mentioned features of the cells (granularity, minimum size or additionally contained information).
- Mis-sizing of a cell is either irrelevant when background is affected only or is revealed due to the above mentioned features of the cells (granularity, minimum size, additionally contained information, no cells with background only).
- Mis-sizing of failure color, mistake in failure color can be prevented by encryption and decryption of code A. Code A can additionally contain checks on itself.
- Deletion of single cells during transmission can be revealed by using failure color.
- Repetition of single cells is either not hazardous (when placed correct or at least placed fitting) or is revealed when misplaced.
- Delays in transmission/processing of single cells will be revealed by visible temporary failure color regions.

The probability to reveal all those failure above depends on the size of the cells and on the refresh frequency of the related areas. The cells should be big enough to enable humans to detect errors. Not all areas need to be refreshed frequently. But preferably there is an area with a live sign indicator that is frequently refreshed. If the information to be displayed is transmitted with low frequency only or if the information to be transmitted results in small picture elements (which results in either small cells or only few cells), additional safety measures can be added: e.g. filter codes B, C may be encrypted before transmission respectively decrypted before execution. If the information is transmitted with higher frequency (e.g. information including a life sign indicator) and if the picture elements which are carrying information are big enough (so the filter produces enough cells to apply fair random functions to the filter and the cells have an appropriate small size but big enough for human failure revelation) an encryption/decryption is not required. The frequency of information update ensures a failure revelation in a corresponding failure revelation time.

In order to improve failure revelation the technical color catalogs shall be softened to human purposes: set basic colors including tolerable spectrum surrounding the basic color. Further, the amount of pixels forming an information shall be aligned to human failure revelation purposes.

Further failure mitigating / revealing measure can be:
- Display of a color indicator to reveal a total failure of a color channel
- Display of a test row, to reveal line failures of a color channel
- Display of a test line, to reveal row failure of a color channel
- Display of a static element/text pattern for comparison
- Regular calibration of the operator terminal

By dividing the target image into partial images which are transmitted from a safe computer to the information terminal and are rejoined at the information terminal, a failure in transmission or processing is made visible due to a mismatch of the partial images, which can be easily recognized by a human operator. As the safety of the displayed information must be ensured only when the human operator uses the information, the embedding of the human operator into the failure revelation process is sufficient. Therefore according to the invention the information terminal used to display information can be kept non-safe. Thus sophisticated bit-level safety procedures at the operator terminal can be put aside. Low end operator terminals can be supported. The safe computer that is needed for this solution may be centralized. In the end the overall costs for one safe computer and n non-safe information terminals will be lower compared to n safe operator computers as needed with the currently existing solutions.

## Claims

1. Method for transferring information to be displayed at a non-safe information terminal with a display device,
the method comprising:
- Graphical preparation of the information by generating a target image by means of a safe computer, wherein the target image contains the information to be displayed;
- Generation of at least two non-overlapping partial images, wherein the at least two partial images together contain all information of the target image;
- Transfer of the partial images from the safe computer to the non-safe information terminal;
- Generation of a recomposed image by assembling the partial images and display of a recomposed image by means of the non-safe information terminal;
- Human voting whether the recomposed image is faulty.

2. Method according to claim 1, **characterized in that** the partial images are generated by applying a filter to the target image.

3. Method according to claim 2, **characterized in that** the filter is generated by the safe computer.

4. Method according to one of the claims 2 or 3, **characterized in that** a random filter is used.

5. Method according to one of the claims 2 through 4, **characterized in that** a binary filter is used.

6. Method according to one of the claims 3 through 5, **characterized in**
**that** at least two filter codes (B, C) are generated by the safe computer,
**that** the filter codes (B, C) are transmitted to the non-safe information terminal, and
**that** the filter codes (B, C) are executed by the information terminal, whereby the content of the partial images are displayed at the information terminal at predefined positions.

7. Method according to one of the preceding claims, **characterized in that** the target image is divided into a plurality of cells.

8. Method according to claim 7, **characterized in that** the cells of each partial image are transmitted and/or displayed in a random order.

9. Method according to one of the claims 7 or 8, **characterized in** the cells of each partial image form a non-continuous image area.

10. Method according to one of the preceding claims, **characterized in that** the at least two partial images are transmitted to a plurality of non-safe information terminals.

11. Method according to one of the preceding claims, **characterized in that** the partial images are transmitted via the same physical transmission channel.

12. Method according to one of the preceding claims, **characterized in that** an executable color code (A) is generated by the safe computer, the color code (A), when executed, initializing the display of a failure color at the display device of the information terminal in an area corresponding in size and shape and location to the area where the recomposed image is to be displayed,
that the color code (A) is transmitted to the non-safe information terminal prior to transmission of the partial images, and
that the color code (A) is executed by means of the information terminal.

13. Method according to one of the preceding claims, **characterized in that** a life sign indicator is applied.

14. Method according to one of the preceding claims, **characterized in that** the method is applied with a train protection system.
